# EUROPEAN PATENT APPLICATION

(11) **EP 4 851 938 A1**
(43) Date of publication of application: **09.12.2026**
(21) Application number: 25181456.2
(22) Date of filing: 06.06.2025
(51) Int. Cl.: G06T 17/00

(54) **DEVICE AND METHOD FOR DETERMINING A 3D REPRESENTATION OF A PHYSICAL OBJECT OR PHYSICAL SCENE**

(71) Applicant: Robert Bosch GmbH, 70442 Stuttgart (DE)
(72) Inventor: Oecal, Melis, 1093 DM Amsterdam (NL); Ngo, Anh Vien, 72147 Nehren (DE); Xing, Xiaoyan, 3442BH Woerden (NL); Karaoglu, Sezer, 1087MC Amsterdam (NL); Gevers, Theo, 1091HR Amsterdam (NL)

(57) **Abstract**

Computer-implemented method for determining a three-dimensional Gaussian splat representation of a physical object or physical scene, the method comprising:
• Receiving an input condition comprising or consisting of at least one of a text description or an image of the physical object or physical scene;
• Generating a point cloud characterizing the input condition;
• Determining, from the point cloud, a set of reference points in three-dimensional space, wherein the reference points are selected to maximize a spatial coverage of the reference points;
• Sampling a first latent representation;
• Determining a second latent representation by providing the first latent representation as input to a denoiser of a diffusion model, wherein the denoiser uses the input condition as conditioning input;
• Decoding the second latent representation into the Gaussian splat representation using a decoder, wherein the decoder comprises:
• A first decoder that generates a first output using the second latent representation and the reference points as input;
• A second decoder that generates a second output using the second latent representation and the references points as input;
• A feature sharing module that fuses the second output into the first output thereby determining a first fused output and that fuses the first output into the second output thereby determining a fused second output;
• A projection module that determines centroids, scales, and rotations of the three-dimensional Gaussian splat representation using the first fused output as input and that determines colors and opacities of the three-dimensional Gaussian splat representation using the second fused output as input.

## Description

### Prior art

Alex Nichol et al.: Point-e: A system for generating 3d point clouds from complex prompts, arXiv preprint arXiv:2212.08751, 2022 discloses Point-e.

Qi Ma et al.: Shapesplat: A large-scale dataset of gaussian splats and their self-supervised pretraining, arXiv preprint arXiv:2408.10906, 2024 discloses GaussianMAE.

Heewoo Jun and Alex Nichol: Shap-e: Generating conditional 3d implicit functions. arXiv preprint arXiv:2305.02463, 2023 discloses Shap-e.

### Technical background

Three-dimensional content generation has become a critical technological requirement in numerous technical fields including virtual reality hardware systems, augmented reality displays, industrial simulation environments, medical visualization platforms, and computer vision training systems. These applications demand high-fidelity 3D assets with real-time rendering capabilities to accurately represent physical objects and scenes.

Conventional methods for acquiring 3D representations of physical reality typically involve complex sensor arrangements such as LiDAR scanners, depth cameras, or multi-view photogrammetry systems. These physical measurement systems capture spatial data points and surface characteristics of real-world objects, which are then processed through computationally intensive reconstruction algorithms. Such approaches require specialized hardware, precise calibration, and substantial post-processing to generate usable 3D assets, making them impractical for many applications requiring rapid content generation.

More recent computer-implemented approaches attempt to generate 3D content using neural networks. DreamFusion and similar techniques employ Score Distillation Sampling (SDS) with pre-trained diffusion models to optimize 3D representations. However, these techniques suffer from fundamental technical limitations, including:
- Prohibitively slow per-scene optimization processes requiring hours of computation time for a single object
- Persistent geometric ambiguities leading to physically implausible representations
- Inability to efficiently scale to diverse object categories due to representation limitations

While 3D Gaussian splats have emerged as a promising representation technique due to their rendering efficiency and visual quality, generating them directly has proven technically challenging. Existing approaches either:
- Require category-specific training, limiting their applicability across diverse physical objects
- Depend on volumetric structures that introduce costly preprocessing requirements
- Struggle to handle the inherently unstructured and discrete nature of Gaussian splats
- Cannot adequately model the complex relationships between geometric and appearance parameters

Of particular technical significance is the use of synthetic 3D content for training and improving machine learning systems. The ability to generate diverse, physically accurate 3D representations is crucial for developing robust computer vision algorithms. Current approaches for training data augmentation rely heavily on manual 3D asset creation or limited procedural generation techniques. By generating realistic 3D Gaussian splats, machine learning systems can be trained with arbitrary viewpoints of physically plausible objects, significantly improving their robustness in real-world sensing applications such as autonomous navigation, object detection or object recognition in variable environments, and industrial quality control systems.

Existing methods for generating training data often produce viewpoint-inconsistent images that introduce biases and errors into vision systems. This technical problem directly impacts the reliability of computer vision in safety-critical applications. A system capable of generating consistent 3D representations would enable the creation of synthetic training datasets with precise control over object properties, lighting conditions, and viewpoint parameters - critical technical factors for developing reliable machine perception systems.

The invention addresses these technical challenges by providing a computer-implemented method for direct generation of 3D Gaussian splat representations with physical plausibility, viewpoint consistency, and real-time rendering capabilities.

### Disclosure of the invention

In a first aspect, the invention concerns a computer-implemented method for determining a three-dimensional Gaussian splat representation of a physical object or physical scene, the method comprising:
- Receiving an input condition comprising or consisting of at least one of a text description or an image of the physical object or physical scene;
- Generating a point cloud characterizing the input condition;
- Determining, from the point cloud, a set of reference points in three-dimensional space, wherein the reference points are selected to maximize a spatial coverage of the reference points;
- Sampling a first latent representation;
- Determining a second latent representation by providing the first latent representation as input to a denoiser of a diffusion model, wherein the denoiser uses the input condition as conditioning input;
- Decoding the second latent representation into the Gaussian splat representation using a decoder, wherein the decoder comprises:
   - A first decoder that generates a first output using the second latent representation and the reference points as input;
   - A second decoder that generates a second output using the second latent representation and the references points as input;
   - A feature sharing module that fuses the second output into the first output thereby determining a first fused output and that fuses the first output into the second output thereby determining a fused second output;
   - A projection module that determines centroids, scales, and rotations of the three-dimensional Gaussian splat representation using the first fused output as input and that determines colors and opacities of the three-dimensional Gaussian splat representation using the second fused output as input.

The term "three-dimensional Gaussian splat representation" may be understood as a computer graphics representation technique where a three-dimensional object or scene is modeled as a collection of three-dimensional Gaussian primitives, each defined by a set of parameters. Each Gaussian primitive may be characterized by a centroid position in three-dimensional space, scale parameters that may define the extent in each dimension, rotation parameters that may define the orientation, color parameters that may define the visual appearance, and an opacity parameter that may define the transparency.

The term "physical object or physical scene" may be understood as referring to any tangible item, structure, environment, or collection thereof that exists or could exist in the physical world and that may be represented in a three-dimensional digital format. This may include, but is not limited to, inanimate objects such as furniture, vehicles, buildings, or tools; natural elements such as plants, terrain, or geological formations; as well as interior or exterior environments comprising multiple physical elements arranged in spatial relation to one another. The term may encompass objects that actually exist in physical reality and have been captured through imaging techniques.

The term "input condition" may be understood as digital information that describes or represents the physical object or scene to be generated in three-dimensional form. This input condition may comprise textual information in the form of natural language descriptions, specifications, or prompts that characterize the desired physical object or scene. Alternatively or additionally, the input condition may comprise one or more images depicting the physical object or scene from one or more viewpoints.

The term "point cloud characterizing the input condition" may be understood as a collection of points in three-dimensional space that represent an initial coarse geometric structure of the physical object or scene described by the input condition. Each point may be defined by three-dimensional coordinates (x, y, z) in a coordinate system. The point cloud may be generated through various computational means, such as through a neural network trained to predict three-dimensional structures from textual descriptions or images, through geometric inference from visual cues in input images, or through other algorithmic processes that can convert the input condition into a set of spatial points.

The term "reference points" may be understood as a subset of points in three-dimensional space that are selected from or derived from the point cloud to serve as "spatial anchors" or positional guides for subsequent processing steps. These reference points may function as landmarks that define the overall spatial structure of the object or scene being represented. They may provide positional context that helps to organize and structure the generation of the detailed three-dimensional representation. The reference points may be fewer in number than the original point cloud.

The term "maximize a spatial coverage" may be understood as a selection criterion or objective function for determining reference points, wherein the points are chosen to be distributed throughout the three-dimensional volume in a manner that optimizes their spatial distribution. This may involve selecting points that are sufficiently distant from one another to cover the entire volume of interest while using a minimal number of points. The maximization of spatial coverage may be achieved through various algorithmic means, such as farthest point sampling, which iteratively selects points that are maximally distant from all previously selected points.

The term "sampling a first latent representation" may be understood as a process of generating or selecting a point or vector in a high-dimensional mathematical space, referred to as a latent space, which may encode abstract features or characteristics relevant to three-dimensional structures. This sampling process may involve drawing random values according to a predefined probability distribution, such as a normal or uniform distribution. The resulting latent representation may serve as a starting point for the generative process and may be subsequently processed or refined to produce a more specific representation.

The term "denoiser of a diffusion model" may be understood as a computational component, typically implemented as a neural network, that is trained to gradually remove noise from a noise-corrupted latent representation. The diffusion model may operate on the principle of reversing a forward diffusion process, where noise is progressively added to data. The denoiser may be trained to predict the direction and magnitude of modifications needed to transform a noisy latent representation toward a cleaner, more structured one.

The term "conditioning input" may be understood as supplementary information provided to the denoiser that guides or constrains the denoising process toward generating specific types of outputs. This conditioning may allow the same denoiser to produce different results based on the provided conditioning information. In the context of the invention, the conditioning input may be derived from the input condition (text or image) and may encode semantic or visual characteristics that should be reflected in the generated three-dimensional representation.

The term "decoding the second latent representation" may be understood as the process of transforming the abstract, high-dimensional latent vector (the second latent representation that has been denoised) into concrete parameters that define the three-dimensional Gaussian splat representation. This decoding process may involve computational transformations, typically implemented through neural networks, that map from the latent space to the parameter space of the Gaussian splats.

The terms "first decoder" and "second decoder" may be understood as specialized neural network components that process different aspects of the three-dimensional representation. The first decoder may be primarily responsible for extracting and processing information related to geometric properties of the representation, while the second decoder may focus on appearance-related properties. These decoders may operate in parallel, processing the same latent representation but producing different types of outputs.

The term "feature sharing module" may be understood as a computational component that facilitates information exchange between the specialized decoder branches (i.e., the first and second decoders). This module may identify features or patterns that are relevant to both geometric and appearance aspects of the three-dimensional representation and enable their sharing between the decoder branches. The feature sharing module may help maintain consistency between geometry and appearance, ensuring that geometric features like edges or surfaces have appropriate corresponding appearance characteristics. This module may be implemented using neural network layers that can identify, transform, and distribute relevant information between the branches.

The term "fuses" may be understood as the process of combining or integrating information from one processing branch into another through a residual connection mechanism. In the context of the feature sharing module, this fusion process may specifically involve generating a shared feature representation from both branches, which is then added to the original features of each branch. This approach may be implemented as a residual connection, where the shared features are additively combined with the original features rather than replacing them. For example, if *T_{g}* represents features from the first decoder and *T_{c}* represents features from the second decoder, the feature sharing module may generate a shared feature *T_{f} = fϑ*(*T_{g}, T_{c}*), which is then added to the original features to produce *T̂_{g} = T_{g} + T_{f}* and *T̂_{c} = T_{c} + T_{f}.* This residual approach may preserve all original information while selectively enhancing it with complementary information from the other branch. The residual nature of the fusion may allow each branch to maintain its specialization while still benefiting from cross-branch information, potentially leading to more coherent and consistent three-dimensional representations where geometric and appearance properties are properly aligned.

The term "projection module" may be understood as a computational component that transforms the fused outputs from the decoders into specific parameter values that define the three-dimensional Gaussian splat representation. This module may implement the final mapping from the abstract features processed by the decoders to concrete parameter values such as positions, scales, rotations, colors, and opacities. The projection module may be implemented using neural network layers that are specifically designed to output values in the appropriate ranges and formats for each parameter type.

The terms "centroids, scales, and rotations" may be understood as the geometric parameters that define the spatial properties of each Gaussian primitive in the three-dimensional representation. Centroids may refer to the three-dimensional coordinates (x, y, z) that specify the central position of each Gaussian in three-dimensional space. Scales may refer to the extent or size of each Gaussian along three principal axes, potentially represented as three scalar values (sx, sy, sz). Rotations may refer to the orientation of each Gaussian in three-dimensional space, which may be represented using various rotation formats such as quaternions, Euler angles, or rotation matrices. The terms "colors and opacities" may be understood as the appearance parameters that define the visual properties of each Gaussian primitive in the three-dimensional representation. Colors may refer to the RGB (Red, Green, Blue) values that define the hue and intensity of each Gaussian, typically represented as three scalar values. Opacities may refer to the transparency or alpha values of each Gaussian, typically represented as a single scalar value ranging from fully transparent to fully opaque.

Advantageously, the method enables the direct generation of three-dimensional Gaussian splat representations from minimal input (text description or single image), eliminating the need for computationally expensive multi-view optimization processes traditionally required for creating 3D Gaussian splats.

Also advantageously, the technical design of separating parameter generation between geometry (centroids, scales, rotations) and appearance (colors, opacities) provides a more controlled approach to generating the complex, multifaceted parameter set required for Gaussian splat representations. This separation improves the quality auf the predicted splats by allowing specialized processing for different parameter types while maintaining necessary consistency through the feature sharing mechanism.

Also advantageously, the end-to-end nature of the method provides a streamlined technical pipeline that eliminates multiple intermediate processing steps required by traditional approaches to 3D content generation. This integrated approach reduces overall computational requirements.

In embodiments of the method, determining the set of reference points may be achieved by applying a farthest point sampling algorithm to the point cloud.

Advantageously, reference points selected through farthest point sampling may provide optimal spatial conditioning for the decoder architecture. The comprehensive spatial coverage may ensure that the decoder has reference information about all regions of the three-dimensional space, leading to more accurate and consistent generation of Gaussian splat parameters throughout the entire volume of the represented object or scene.

In another aspect, the invention concerns a computer-implemented method for determining an image of a physical object or physical scene from a predefined viewpoint comprising
- Determining a three-dimensional Gaussian splat representation of the physical object or physical scene according to any embodiment of the method above using at least one of a text description or an image of the physical object or physical scene as input condition;
- Rendering the three-dimensional Gaussian splat representation from the viewpoint to generate an image.

The term "predefined viewpoint" may be understood as a specific position and orientation in three-dimensional space from which the three-dimensional representation is to be observed and rendered.

The term "rendering the three-dimensional Gaussian splat representation" may be understood as the technical process of generating a two-dimensional image from the three-dimensional Gaussian splat representation according to a specific viewpoint.

In another aspect, the invention concerns a computer-implemented method for creating and/or augmenting a dataset comprising images, wherein the dataset is configured for training and/or testing a machine learning system, wherein creating and/or augmenting the dataset comprises generating at least one image of a physical object or physical scene from a predefined at least one viewpoint according to an embodiment of the method presented above and including the at least one image in the dataset.

Advantageously, the computational efficiency of the method for determining the Gaussian splats allows for determining accurate renderings from different views based on a single image or a single description. In turn this also allows for efficiently generating a plurality of different images from a plurality of viewpoints and/or for different scenes or objects

In another aspect, the invention concerns a computer-implemented method for training a machine learning system comprising the steps of:
- Creating or augmenting a dataset according to an embodiment of the method presented above;
- Providing at least a subset of the images of the dataset as input to the machine learning system thereby determining a predicted output of the machine learning system;
- Training the machine learning system according to a loss function, wherein the loss function characterizes a difference between the predicted output and a desired output for the subset of images.

The method may involve training the machine learning system in an unsupervised fashion, i.e., only providing the images during training of the machine learning system. This may be useful for training machine learning system such as image-based variational auto encoders, normalizing flows or diffusion models.

Alternatively, it is also possible for the method to comprise a step of annotating at least the generated images of the dataset with the desired output that shall be predicted by the machine learning system. The annotation may especially be an annotation indication a classification of the generated images, bounding boxes indicating objects comprised in the generated images, or a semantic segmentation of the generated images. Alternatively or additionally, the annotation may also comprise real values, i.e., be directed for training the machine learning system for regression analysis.

In another aspect, the invention concerns a computer-implemented method for training the decoder, the method comprising:
- Obtaining a plurality of three-dimensional Gaussian splat representations characterizing a physical object or a physical scene;
- Determining a set of reference points, wherein the reference points are three-dimensional points selected to maximize a spatial coverage of the mean of the Gaussian splat representations;
- Grouping the three-dimensional Gaussian splat representations into groups according to the reference points;
- Determining a training latent representation, wherein the training latent representation is determined by using the groups as input to an encoder;
- Decoding the training latent representation into three-dimensional Gaussian splat parameters characterizing predicted three-dimensional Gaussian splat representations, wherein decoding is achieved using the training latent representation and the reference points as input to the decoder;
- Determining a loss value as output of a loss function, wherein the loss function comprises or consists of a first loss term characterizing a difference between the three-dimensional Gaussian splat representations and the predicted three-dimensional Gaussian splat representations;
- Updating parameters of the decoder based on the loss value.

The term "training the decoder" may be understood as the process of optimizing the parameters or weights of the neural networks that comprise the decoder architecture through an iterative procedure that minimizes one or more objective functions also known as loss functions.

The term "obtaining a plurality of three-dimensional Gaussian splat representations" may be understood as acquiring a dataset of pre-existing Gaussian splat models that serve as ground truth examples for the training process. This plurality may especially be assembled from complementary sources, e.g., ShapeSplatsV1, which may provide 52K three-dimensional Gaussian splat assets from 55 categories with 72 views each, OmniObject3D, which may comprise 6K objects in 190 categories, with 100 random views each, where their three-dimensional Gaussian splat representations may be produced by LightGaussian, and a curated set of 20K samples generated using LGM. For this third source, the curated assets may be rendered from multiple viewpoints, and DINOv2 embeddings of rendered and dataset views may be compared via cosine similarity, potentially discarding assets with low similarity scores. This merged dataset may enable robust generalization in native three-dimensional generation by providing diverse examples across numerous object categories and visual characteristics.

The term "grouping the three-dimensional Gaussian splat representations into groups" may be understood as a process of organizing or clustering the individual Gaussian primitives based on their spatial proximity to the reference points. This may involve applying a *k*-nearest neighbor algorithm to associate each reference point with *k* neighboring Gaussian primitives, forming a group. Mathematically, this process may be represented as $G = KNN \left(S, {μ}_{g}\right) ∈ {ℝ}^{p \times k \times 14}$, where *S* represents the Gaussian splats, *µ_{g}* represents the reference points, *p* denotes the number of groups and is a hyperparameter of the method, and *k* denotes the number of Gaussians per group and is a hyperparameter of the method.

The term "encoder" may be understood as a neural network component that transforms the grouped Gaussian splat representations into latent representations. This encoder may follow the encoding strategy of GaussianMAE, where the encoder may be implemented as a transformer-based architecture. The concrete encoding process may involve several steps: first, the Gaussian groups *G*, which may be obtained through k-nearest neighbor grouping around spatial anchors, may be processed by a tokenizer to produce group tokens *T.* These group tokens may then be fed into the transformer-based encoder, which may output a latent representation *z.* This latent *z* may serve as a group-structured representation of the three-dimensional input, preserving essential geometric and appearance information in a format suitable for the diffusion process.

The term "updating parameters of the decoder" may be understood as the process of adjusting the weights or parameters of the neural networks that comprise the decoder architecture based on the computed loss value. This update process may typically employ gradient-based optimization methods, such as stochastic gradient descent or its variants (Adam, RMSprop, etc.), where the gradients of the loss function with respect to the decoder parameters are computed through backpropagation.

In embodiments of the method for training the encoder, the loss function may further comprise at least one, preferably a combination, of the following terms, wherein each of the following terms is preferably weighted by a weighting factor:
- A second loss term indicating a difference between a first rendered image and a second rendered image, wherein the first rendered image is determined based on the three-dimensional Gaussian splat representations and wherein the second rendered image is determined based on the predicted three-dimensional Gaussian splat representations;
- A third loss term characterizing a locality-preserving regularization loss between neighboring pixels of the second rendered image.

The term "difference between a first rendered image and a second rendered image" may be understood as a rendering loss that quantifies the visual discrepancy between images rendered from the original and predicted Gaussian splat representations. This rendering loss may be mathematically formulated as 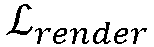 *=* 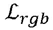 *+ β ·* 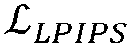 *,* where 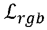 may represent a direct pixel-wise comparison between the rendered images, and 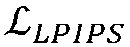 may represent a perceptual similarity metric. The *L_{rgb}* component may typically compute the mean absolute or squared difference between corresponding pixel values in the two rendered images, capturing low-level visual differences. The 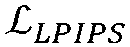 component, optionally weighted by factor *β*, may assess perceptual similarity using the Learned Perceptual Image Patch Similarity metric, which may compare feature activations in a pre-trained neural network to better align with human perception of image differences. Advantageously, this dual approach to image comparison enables the training process to capture both pixel-accurate reconstruction and perceptually relevant visual qualities.

In another aspect, the invention concerns a computer-implemented method for training the denoiser of the diffusion model, the method comprising:
- Obtaining a plurality of three-dimensional Gaussian splat representations characterizing physical objects or physical scenes;
- Obtaining corresponding conditioning inputs comprising at least one of a text description or an image for each of the three-dimensional Gaussian splat representations;
- Determining training latent representations by processing the three-dimensional Gaussian splat representations using an encoder;
- For a batch of training latent representations:
   - Randomly sampling timesteps;
   - Applying a forward diffusion process to the training latent representations by gradually adding noise over the randomly sampled timesteps to generate noisy training latent representations;
   - Providing the noisy training latent representations and corresponding conditioning inputs to the denoiser of the diffusion model;
   - Obtaining predicted latent representations from the diffusion model;
   - Computing a loss value characterizing a difference between the predicted latent representations and the training latent representations;
   - Updating parameters of the denoiser of the diffusion model based on the loss value.

The term "obtaining a plurality of three-dimensional Gaussian splat representations" and "obtaining corresponding conditioning inputs" may be understood as assembling the training dataset, comprising the ShapeSplatsV1, OmniObject3D, and curated LGM samples, along with their corresponding text descriptions (generated using, e.g., BLIP-2) or images (selected from available views) as described above.

The loss function for training the denoiser *d_{ρ}* may be expressed as the expectation: ${E}_{z , t , ϵ ∼ N \left(0, I\right)} {\left‖{d}_{ρ \left({z}_{t}, C, t\right)}-z\right‖}^{2}$ where:
*z* represents the clean latent representation, *zₜ* represents the noisy latent at, timestep *t*, *C* represents the conditioning input derived from text or image, *t* denotes the timestep, and *ε* represents noise sampled from a multivariate standard normal distribution 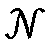 (0, *I*). This objective may train the denoiser to recover the original latent z from its noise-corrupted version zt when conditioned on input C. The denoiser d 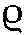 may be implemented as a transformer-based architecture, potentially initialized with weights from Shap-e as mentioned in the invention report.

In all embodiments, the denoiser is a neural network may be configured to receive a text description or an image as conditioning input by providing an embedding of the text description or image to layers of the neural network by means of cross attention.

In all embodiments, the embedding of the text description or image may be determined by a CLIP machine learning system and/or the denoiser may be configured according to the Shap-e architecture and/or the encoder may be configured according to the architecture of GaussianMAE and/or the first decoder and second decoder may be transformers with a predefined amount of transformer blocks and/or the point cloud characterizing the input condition may be determined using the input condition as input to a Point-e model.

Embodiments of the invention will be discussed with reference to the following figures in more detail. The figures show:
- Figure 1: a schematic representation of a method for determining a three-dimensional Gaussian splat representation;
- Figure 2: a schematic representation of a method for training a decoder;
- Figure 3: a schematic representation of a method for training a denoiser of a diffusion model;
- Figure 4: a training system for training a machine learning system
- Figure 5: a control system comprising the machine learning system controlling an actuator in its environment;
- Figure 6: the control system controlling an at least partially autonomous robot;
- Figure 7: the control system controlling a manufacturing machine.

### Description of the embodiments

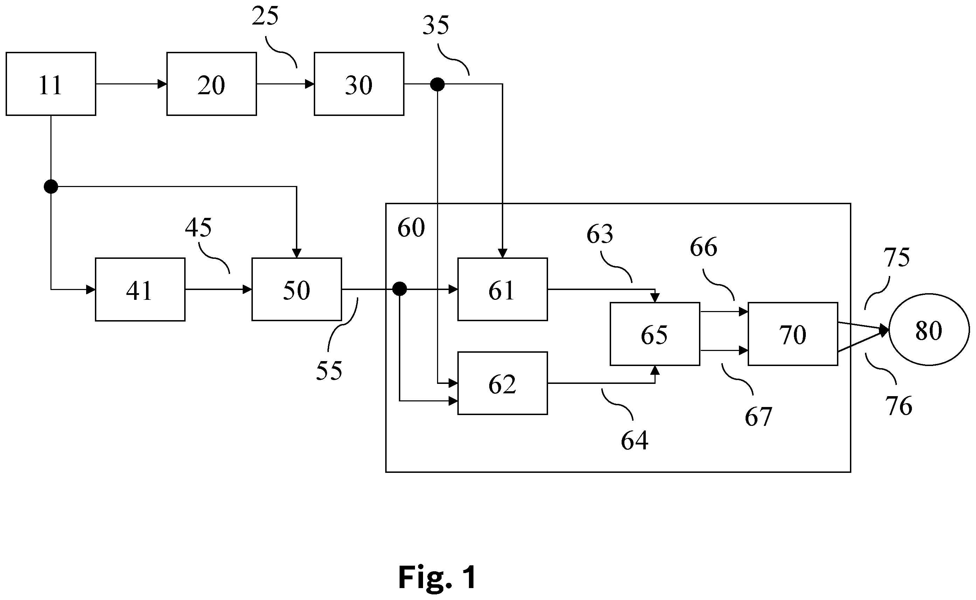

Figure 1 shows a schematic representation of the computer-implemented method for determining a three-dimensional Gaussian splat representation of a physical object or physical scene according to an embodiment of the present invention.

The method may begin with receiving an input condition (11), which may comprise or consist of at least one of a text description or an image of the physical object or physical scene to be represented. This input condition (11) may serve as the basis for generating a three-dimensional representation of the described or depicted object or scene.

The input condition (11) may be provided to a point cloud generator (20), which may generate a point cloud (25) characterizing the input condition (11). In preferred embodiments, the point cloud generator (20) may be implemented using an off-the-shelf model such as Point-E. The point cloud (25) may represent an initial coarse geometric structure of the physical object or scene in three-dimensional space.

The point cloud (25) may then be processed by a reference points selector (30) to determine a set of reference points (35) in three-dimensional space. The reference points (35) may be selected to maximize a spatial coverage of the reference points. In preferred embodiments, the reference points selector (30) may implement farthest point sampling, wherein points are iteratively selected based on maximizing their minimum distance to previously selected points. These reference points (35) may serve as spatial anchors that define the overall structure of the three-dimensional representation being generated.

Concurrently, the input condition (11) may be provided to a first latent sampler (41), which may sample a first latent representation (45). This first latent representation (45) may comprise noise and may serve as the starting point for the generative process.

The first latent representation (45) and the input condition (11) may then be provided to a denoiser (50) of a diffusion model. The denoiser (50) may process the first latent representation (45), using the input condition (11) as conditioning input, to determine a second latent representation (55) that has reduced noise compared to the first latent representation (45). In preferred embodiments, the denoiser (50) may be implemented as a transformer-based architecture, e.g., an architecture used for Shap-e, and may be initialized with pre-trained weights from Shap-e to leverage existing three-dimensional priors.

The second latent representation (55) and the reference points (35) may then be provided to a decoder (60). The second latent representation (55) and reference points (35) may be first processed by a first decoder (61) and a second decoder (62) comprised by the decoder (60). The first decoder (61) may generate a first output (63), which may relate primarily to geometric properties, while the second decoder (62) may generate a second output (64), which may relate primarily to appearance properties. In preferred embodiments, these decoders may be transformer-based and may be conditioned on positional embeddings derived from the reference points (35) to facilitate three-dimensional structure recovery.

The first output (63) and second output (64) may then be provided to a feature sharing module (65). The feature sharing module (65) may identify correlations between geometric and appearance features and may facilitate information exchange between the specialized decoder branches. The feature sharing module (65) may fuse the second output (64) into the first output (63) to determine a first fused output (66), and may fuse the first output (63) into the second output (64) to determine a second fused output (67). In preferred embodiments, this fusion may be implemented through residual connections, wherein the shared features are added to the original features rather than replacing them. This approach may preserve all original information while selectively enhancing it with complementary information from the other branch.

The first fused output (66) and the second fused output (67) may then be provided to a projection module (70). The projection module (70) may determine geometry parameters (75) and appearance parameters (76) of the three-dimensional Gaussian splat representation. The geometry parameters (75) may comprise centroids, scales, and rotations, while the appearance parameters (76) may comprise colors and opacities. These parameters may fully define each Gaussian primitive in the three-dimensional representation.

Finally, the geometry parameters (75) and appearance parameters (76) may be combined to generate the three-dimensional Gaussian splat representation (80) of the physical object or physical scene. This representation may comprise a plurality of three-dimensional Gaussian primitives defined by the determined parameters, which collectively represent the physical object or scene in a format suitable for efficient rendering from arbitrary viewpoints.

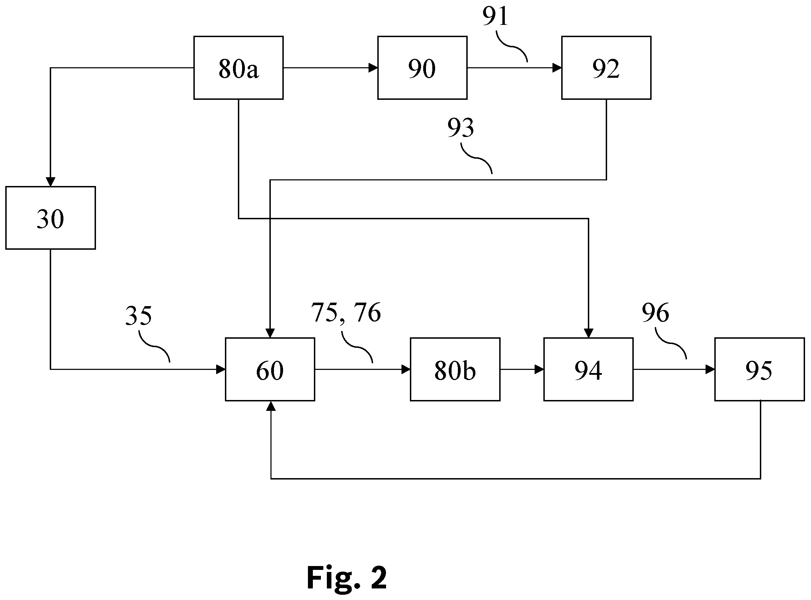

Figure 2 shows a schematic representation of a computer-implemented method for training the decoder (60).

The training method may begin with obtaining a plurality of three-dimensional Gaussian splat representations (80a) characterizing physical objects or physical scenes. These input representations may be obtained from various sources, including ShapeSplatsV1, which may provide 52K three-dimensional Gaussian splat assets from 55 categories with 72 views each; OmniObject3D, which may comprise 6K objects in 190 categories with 100 random views each; and a curated set of 20K samples generated using LGM. Each representation may consist of a complete set of Gaussian parameters including centroids, scales, rotations, colors, and opacities.

The input representations (80a) may be processed by a reference points selector (30) to determine a set of reference points (35) in three-dimensional space. The reference points (35) may be three-dimensional points selected to maximize a spatial coverage of the mean of the Gaussian splat representations. In preferred embodiments, these reference points may be determined using farthest point sampling to ensure optimal spatial distribution.

The input representations (80a) may be provided to a grouping module (90) that groups the three-dimensional Gaussian splat representations into grouped Gaussian representations (91) according to the reference points (35). This grouping process may involve organizing or clustering the individual Gaussian primitives based on their spatial proximity to the reference points. In preferred embodiments, this may be implemented using a k-nearest neighbor algorithm.

The grouped Gaussian representations (91) may then be provided to an encoder (92), which may determine a training latent representation (93). The encoder (92) may preferably be implemented as a transformer-based architecture that processes the grouped representations into a compact latent code. In preferred embodiments, the grouped Gaussian representations may first be processed by a tokenizer to obtain group tokens, *T = Tokenizer*(*G*), with *T* ∈ *R*^{1024×1024}*.* These group tokens may then be processed by the transformer-based encoder to produce the latent representation: *z = E_{θ}*(*T*) and *z* E *R*^{1024×1024}, where *z* is the training latent representation (93) and *θ* represents the encoder's learnable parameters.

The training latent representation (93) and the reference points (35) may then be provided to the decoder (60). The decoder (60) may decode the training latent representation (93) into three-dimensional Gaussian splat parameters (75, 76) characterizing predicted three-dimensional Gaussian splat representations (80b). The decoder architecture may include a first decoder (61) and a second decoder (62) that operate in parallel, with the first decoder focusing on geometric properties and the second decoder on appearance properties. Both decoders may be conditioned on positional embeddings derived from the reference points (35), expressed mathematically as: ${T}_{g} = {D}_{gϕ} \left(z,φ\left({μ}_{g}\right)\right) , {T}_{c} = {D}_{cψ} \left(z,φ\left({μ}_{g}\right)\right)$ where *T_{g}* and *T_{c}* represent the geometry and appearance tokens respectively, *φ*(*µ_{g}*) represents positional embeddings derived from the reference points, and *ϕ* and *ψ* represent the learnable parameters of the geometry and appearance decoders.

The feature sharing module (65) may then process these tokens through a cross-branch fusion operation that may be mathematically expressed as: ${T}_{f} = fϑ \left({T}_{g}, {T}_{c}\right)$ ${\hat{T}}_{g} = {T}_{g} + {T}_{f} , {\hat{T}}_{c} = {T}_{c} + {T}_{f}$ where *T_{f}* represents the fused token, *ϑ* represents the learnable parameters of the feature sharing module, and *T̂_{g}* and *T̂_{c}* represent the updated geometry and appearance tokens with shared information incorporated through residual connections.

The predicted representations (80b) and the original input representations (80a) may then be provided to a loss calculation module (94). The loss calculation module (94) may determine a loss value (96) as output of a loss function. The primary loss function may comprise a parameter reconstruction loss, which may be mathematically formulated as: ${L}_{param} = {\left‖G,G′\right‖}_{1}$ where *G* represents the input Gaussian groups and *G'* represents the reconstructed Gaussian groups. In preferred embodiments, the complete loss function may be expressed as: ${L}_{GVAE} = {λ}_{1} {L}_{param} + {λ}_{2} {L}_{render} + {λ}_{3} {L}_{loc} + {λ}_{4} {L}_{KL}$

Where 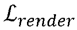 *=* 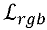 *+ β ·* 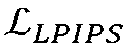 represents a rendering loss combining pixel-wise RGB differences and perceptual similarity, 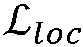 represents a locality-preserving regularization loss encouraging smooth color transitions, 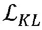 represents a Kullback-Leibler divergence loss applied to the latent representation, and *λ*₁, *λ*₂, *λ*₃, *λ*₄, and *β* are optional weighting coefficients that balance the influence of different loss components.

The loss value (96) may then be provided to a parameter updater (95), which may update parameters of the decoder (60) based on the loss value (96). This update process may typically employ gradient-based optimization methods, such as the Adam optimizer, where the parameters may be updated according to: ${θ}_{t + 1} = {θ}_{t} - η ⋅ {∇}_{θ} {L}_{GVAE} \left({θ}_{t}\right)$ where *θₜ* represents the parameters at iteration *t, η* represents a learning rate, and *∇_{θ}* 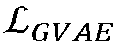 represents the gradient of the loss function with respect to the parameters.

This training process may be applied iteratively over many batches of training data until the decoder (60) achieves satisfactory performance or a convergence criterion is met. The resulting trained decoder may then be used in the method above to generate high-quality three-dimensional Gaussian splat representations from input conditions.

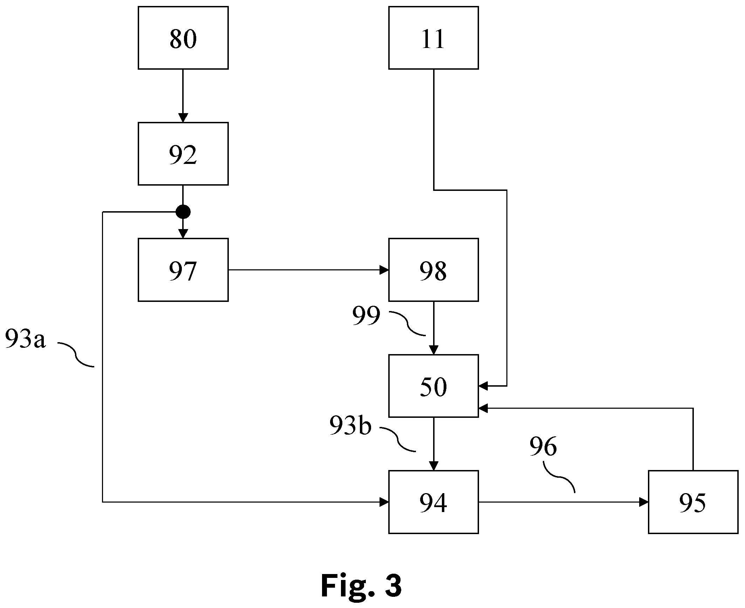

Figure 3 shows a schematic representation of the computer-implemented method for training the denoiser (50) of the diffusion model.

The denoiser training method may begin with obtaining a plurality of three-dimensional Gaussian splat representations (80) characterizing physical objects or physical scenes. As with the decoder training method, these representations may be obtained from sources including ShapeSplatsV1, OmniObject3D, and a curated set of samples generated using LGM.

Concurrently, the method may involve obtaining corresponding conditioning inputs (10) comprising at least one of a text description or an image for each of the three-dimensional Gaussian splat representations (80). For text conditioning, the captions may be generated using natural language models such as BLIP-2. For image conditioning, random views may be selected from all available views of a 3D asset. These conditioning inputs may be encoded into a standardized format, typically using a pre-trained model such as CLIP, which may transform the text or image into a feature vector or embedding.

The three-dimensional Gaussian splat representations (80) may be processed by an encoder (92) to determine training latent representations (93a). The encoder (92) may follow the same architecture as described in the decoder training method, where the Gaussian splats are first grouped based on spatial proximity, tokenized, and then processed by a transformer-based architecture.

For a batch of training latent representations (93a), the method may proceed with several steps. First, a timestep sampler (97) may randomly sample timesteps t from a predetermined range [1, T], where T represents the maximum number of diffusion steps. These timesteps may define the noise levels to be applied in the forward diffusion process.

The training latent representations (93a) and sampled timesteps may be provided to a forward diffusion process module (98). This module may apply a forward diffusion process to the training latent representations by gradually adding noise over the randomly sampled timesteps to generate noisy training latent representations (99).

The noisy training latent representations (99) and corresponding conditioning inputs (10) may then be provided to the denoiser (50) of the diffusion model being trained. The denoiser (50) may be implemented as a transformer-based architecture such as the Shap-e architecture, and may be initialized with pre-trained weights from models such as Shap-e to leverage existing three-dimensional priors. The denoiser (50) may process the noisy latent representations conditioned on the input condition to produce predicted latent representations (93b).

The predicted latent representations (93b) and the original training latent representations (93a) may then be provided to a loss calculation module (94). The loss calculation module (94) may compute a loss value (96) characterizing the difference between the predicted latent representations (93b) and the training latent representations (93a). Mathematically, this denoising objective may be expressed as: ${L}_{ρ} = {E}_{z , t , ϵ ∼ N \left(0, I\right)} {\left‖{d}_{ρ \left({z}_{t}, C, t\right)}-z\right‖}^{2}$ where *d_{ρ}* represents the denoiser with parameters *ρ, zₜ* represents the noisy latent at timestep *t*, *C* represents the conditioning input, and *z* represents the original clean latent.

The loss value (96) may then be provided to a parameter updater (95), which may update parameters of the denoiser (50) of the diffusion model based on the loss value (96). As with the decoder training, this update process may typically employ gradient-based optimization methods, such as the Adam optimizer, where the parameters may be updated according to: ${ρ}_{i + 1} = {ρ}_{t} - η {∇}_{ρ} L \left({ρ}_{i}\right)$ where *ρᵢ* represents the parameters at iteration *i*, *η* represents the learning rate, and *∇_{ρ}* 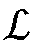 represents the gradient of the loss function with respect to the parameters.

In preferred embodiments, the training may also employ classifier-free guidance, a technique that enhances the conditioning effect during generation. This may involve training the denoiser with both conditioned and unconditioned samples, allowing for stronger adherence to the conditioning input during inference.

The training process may be repeated over multiple batches and epochs until the denoiser (50) achieves satisfactory performance or meets a convergence criterion. It is important to note that this denoiser training may occur after the decoder (60) has been fully trained, establishing a stable latent space for the diffusion model to operate in. This sequential training approach may enhance the overall stability and performance of the generative system.

Upon completion of training, the denoiser (50) may be used in the method described above to transform noisy latent representations into refined latent representations that can be decoded into high-quality three-dimensional Gaussian splat representations.

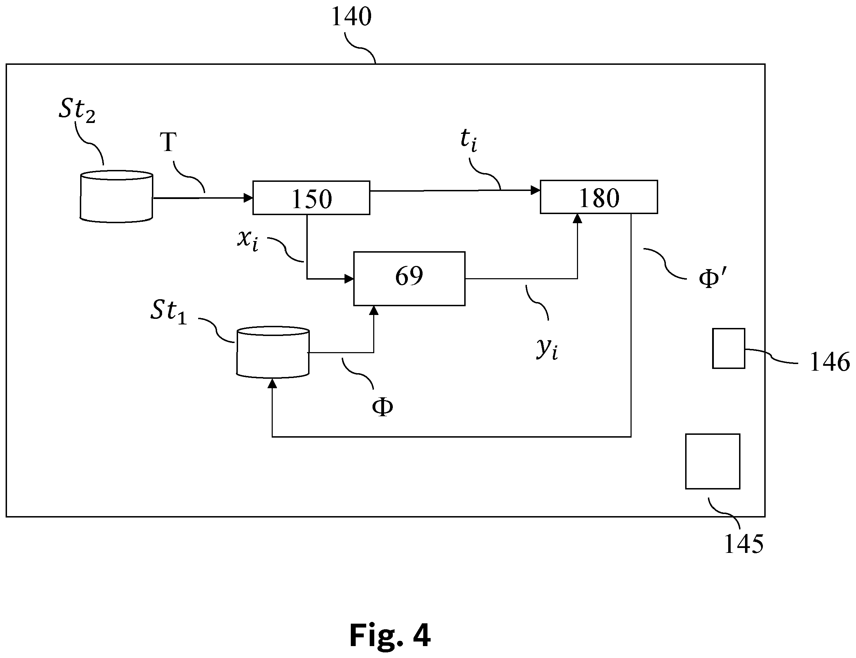

Figure 4 shows an embodiment of a training system (140) for training the machine learning system (69) of the control system (40) by means of a training data set (T). The training data set (T) comprises a plurality of input signals (*xᵢ*) which are used for training the machine learning system (69), wherein the input signals (*xᵢ*) are images and wherein the training data set (T) further comprises, for each input signal (*xᵢ*), a desired output signal (*tᵢ*) which corresponds to the input signal (*xᵢ*) and characterizes a classification of the input signal (*xᵢ*). The training data set (T) includes images (*xᵢ*) that are generated using the computer-implemented method for determining a three-dimensional Gaussian splat representation as described above, wherein the three-dimensional Gaussian splat representations are rendered from various viewpoints to produce images that serve as training examples.

For training, a training data unit (150) accesses a computer-implemented database (St₂), the database (St₂) providing the training data set (T). The training data unit (150) determines from the training data set (T) preferably randomly at least one input signal (*xᵢ*) and the desired output signal (*tᵢ*) corresponding to the input signal (*xᵢ*) and transmits the input signal (*xᵢ*) to the machine learning system (69). The machine learning system (69) determines an output signal (*yᵢ*) based on the input signal (*xᵢ*).

The desired output signal (*tᵢ*) and the determined output signal (*yᵢ*) are transmitted to a modification unit (180).

Based on the desired output signal (*tᵢ*) and the determined output signal (*yᵢ*), the modification unit (180) then determines new parameters (Φ') for the machine learning system (69). For this purpose, the modification unit (180) compares the desired output signal (*tᵢ*) and the determined output signal (*yᵢ*) using a loss function. The loss function determines a first loss value that characterizes how far the determined output signal (*yᵢ*) deviates from the desired output signal (*tᵢ*). In the given embodiment, a negative log-likehood function is used as the loss function. Other loss functions are also conceivable in alternative embodiments.

Furthermore, it is conceivable that the determined output signal (*yᵢ*) and the desired output signal (*tᵢ*) each comprise a plurality of sub-signals, for example in the form of tensors, wherein a sub-signal of the desired output signal (*tᵢ*) corresponds to a sub-signal of the determined output signal (*yᵢ*). It is conceivable, for example, that the machine learning system (69) is configured for object detection and a first sub-signal characterizes a probability of occurrence of an object with respect to a part of the input signal (*xᵢ*) and a second sub-signal characterizes the exact position of the object. If the determined output signal (*yᵢ*) and the desired output signal (*tᵢ*) comprise a plurality of corresponding sub-signals, a second loss value is preferably determined for each corresponding sub-signal by means of a suitable loss function and the determined second loss values are suitably combined to form the first loss value, for example by means of a weighted sum.

The modification unit (180) determines the new parameters (Φ') based on the first loss value. In the given embodiment, this is done using a gradient descent method, preferably stochastic gradient descent, Adam, or AdamW. In further embodiments, training may also be based on an evolutionary algorithm or a second-order method for training neural networks.

In other preferred embodiments, the described training is repeated iteratively for a predefined number of iteration steps or repeated iteratively until the first loss value falls below a predefined threshold value. Alternatively or additionally, it is also conceivable that the training is terminated when an average first loss value with respect to a test or validation data set falls below a predefined threshold value. In at least one of the iterations the new parameters (Φ') determined in a previous iteration are used as parameters (Φ) of the machine learning system (69).

Furthermore, the training system (140) may comprise at least one processor (145) and at least one machine-readable storage medium (146) containing instructions which, when executed by the processor (145), cause the training system (140) to execute a training method according to one of the aspects of the invention.

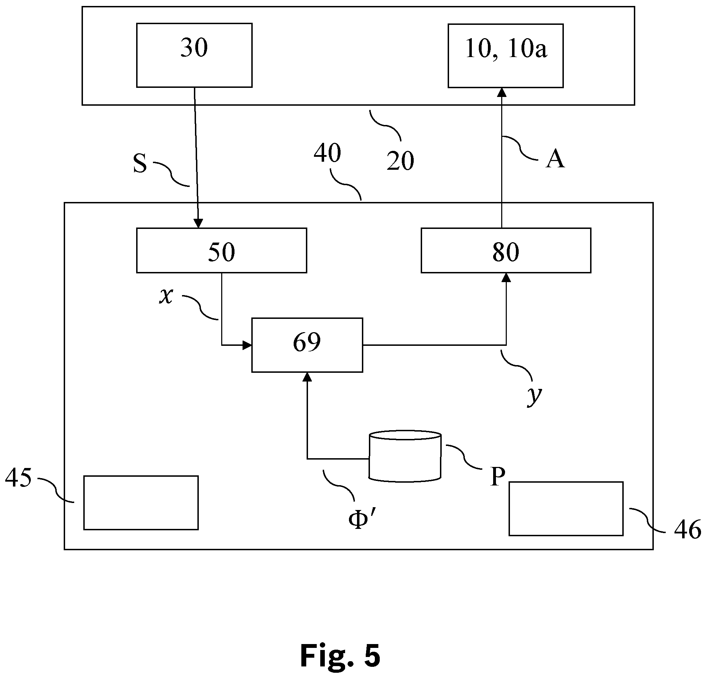

Figure 5 shows an embodiment of a control system (40) determining control signals (A) for an actuator (10) in its environment (20). The actuator (10) and its environment (20) will be jointly called actuator system. At preferably evenly spaced points in time, a sensor (30) senses a condition of the actuator system. The sensor (30) may comprise several sensors. Preferably, the sensor (30) is an optical sensor that takes images of the environment (20). An output signal (S) of the sensor (30) (or, in case the sensor (30) comprises a plurality of sensors, an output signal (S) for each of the sensors) which encodes the sensed condition is transmitted to the control system (40).

Thereby, the control system (40) receives a stream of sensor signals (S). It then computes a series of control signals (A) depending on the stream of sensor signals (S), which are then transmitted to the actuator (10).

The control system (40) receives the stream of sensor signals (S) of the sensor (30) in an optional receiving unit (50). The receiving unit (50) transforms the sensor signals (S) into input signals (*x*). Alternatively, in case of no receiving unit (50), each sensor signal (S) may directly be taken as an input signal (*x*). The input signal (*x*) may, for example, be given as an excerpt from the sensor signal (S). Alternatively, the sensor signal (S) may be processed to yield the input signal (*x*)*.* In other words, the input signal (*x*) is provided in accordance with the sensor signal (S).

The input signal (*x*) is then passed on to a machine learning system (69).

The machine learning system (69) is parametrized by parameters (Φ), which are stored in and provided by a parameter storage (*St*₁)*.*

The machine learning system (69) determines an output signal (*y*) from the input signals (*x*). The output signal (*y*) comprises information that assigns one or more labels to the input signal (*x*). The output signal (*y*) is transmitted to an optional conversion unit (80), which converts the output signal (*y*) into the control signals (A). The control signals (A) are then transmitted to the actuator (10) for controlling the actuator (10) accordingly. Alternatively, the output signal (*y*) may directly be taken as control signal (A).

The actuator (10) receives control signals (A), is controlled accordingly and carries out an action corresponding to the control signal (A). The actuator (10) may comprise a control logic which transforms the control signal (A) into a further control signal, which is then used to control actuator (10).

In further embodiments, the control system (40) may comprise the sensor (30). In even further embodiments, the control system (40) alternatively or additionally may comprise an actuator (10).

In still further embodiments, it can be envisioned that the control system (40) controls a display (10a) instead of or in addition to the actuator (10).

Furthermore, the control system (40) may comprise at least one processor (45) and at least one machine-readable storage medium (46) on which instructions are stored which, if carried out, cause the control system (40) to carry out a method according to an aspect of the invention.

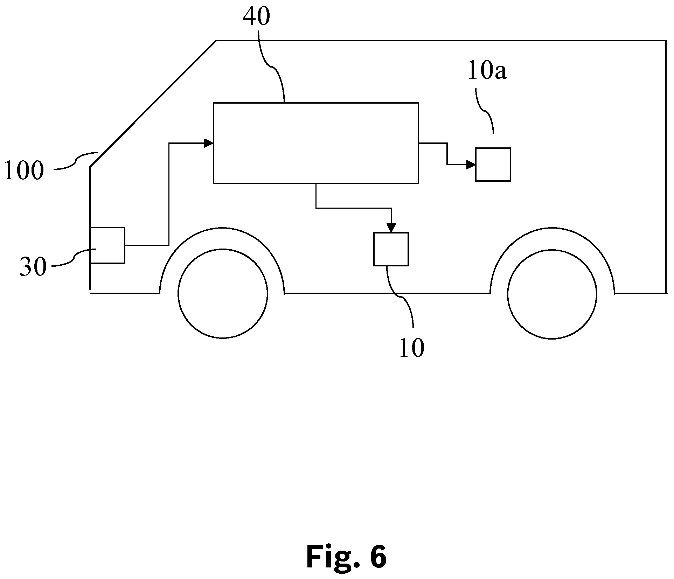

Figure 6 shows an embodiment in which the control system (40) is used to control an at least partially autonomous robot, e.g., an at least partially autonomous vehicle (100).

The sensor (30) may comprise one or more video sensors and/or one or more radar sensors and/or one or more ultrasonic sensors and/or one or more LiDAR sensors. Some or all of these sensors are preferably but not necessarily integrated in the vehicle (100). The input signal (*x*) may hence be understood as an input image and the machine learning system (69) as an image classifier.

The machine learning system (69) may be configured to detect objects in the vicinity of the at least partially autonomous robot based on the input image (*x*). The output signal (*y*) may comprise an information, which characterizes where objects are located in the vicinity of the at least partially autonomous robot. The control signal (A) may then be determined in accordance with this information, for example to avoid collisions with the detected objects.

The actuator (10), which is preferably integrated in the vehicle (100), may be given by a brake, a propulsion system, an engine, a drivetrain, or a steering of the vehicle (100). The control signal (A) may be determined such that the actuator (10) is controlled such that vehicle (100) avoids collisions with the detected objects. The detected objects may also be classified according to what the machine learning system (69) deems them most likely to be, e.g., pedestrians or trees, and the control signal (A) may be determined depending on the classification.

Alternatively or additionally, the control signal (A) may also be used to control the display (10a), e.g., for displaying the objects detected by the machine learning system (69). It can also be imagined that the control signal (A) may control the display (10a) such that it produces a warning signal if the vehicle (100) is close to colliding with at least one of the detected objects. The warning signal may be a warning sound and/or a haptic signal, e.g., a vibration of a steering wheel of the vehicle.

In further embodiments, the at least partially autonomous robot may be given by another mobile robot (not shown), which may, for example, move by flying, swimming, diving or stepping. The mobile robot may, inter alia, be an at least partially autonomous lawn mower, or an at least partially autonomous cleaning robot. In all of the above embodiments, the control signal (A) may be determined such that propulsion unit and/or steering and/or brake of the mobile robot are controlled such that the mobile robot may avoid collisions with said identified objects.

In a further embodiment, the at least partially autonomous robot may be given by a gardening robot (not shown), which uses the sensor (30), preferably an optical sensor, to determine a state of plants in the environment (20). The actuator (10) may control a nozzle for spraying liquids and/or a cutting device, e.g., a blade. Depending on an identified species and/or an identified state of the plants, an control signal (A) may be determined to cause the actuator (10) to spray the plants with a suitable quantity of suitable liquids and/or cut the plants.

In even further embodiments, the at least partially autonomous robot may be given by a domestic appliance (not shown), like e.g. a washing machine, a stove, an oven, a microwave, or a dishwasher. The sensor (30), e.g., an optical sensor, may detect a state of an object which is to undergo processing by the household appliance. For example, in the case of the domestic appliance being a washing machine, the sensor (30) may detect a state of the laundry inside the washing machine. The control signal (A) may then be determined depending on a detected material of the laundry.

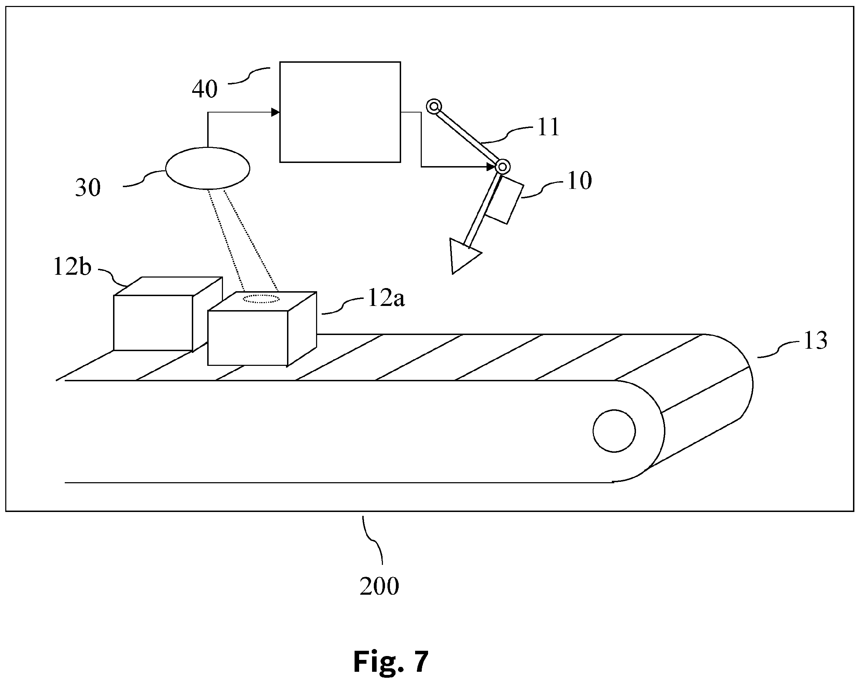

Figure 7 shows an embodiment in which the control system (40) is used to control a manufacturing machine (11), e.g., a punch cutter, a cutter, a gun drill or a gripper, of a manufacturing system (200), e.g., as part of a production line. The manufacturing machine may comprise a transportation device, e.g., a conveyer belt or an assembly line, which moves a manufactured product (12). The control system (40) controls an actuator (10), which in turn controls the manufacturing machine (11).

The sensor (30) may be given by an optical sensor which captures properties of, e.g., a manufactured product (12). The machine learning system (69) may hence be understood as an image classifier.

The machine learning system (69) may determine a position of the manufactured product (12) with respect to the transportation device. The actuator (10) may then be controlled depending on the determined position of the manufactured product (12) for a subsequent manufacturing step of the manufactured product (12). For example, the actuator (10) may be controlled to cut the manufactured product at a specific location of the manufactured product itself. Alternatively, it may be envisioned that the machine learning system (69) classifies, whether the manufactured product is broken and/or exhibits a defect. The actuator (10) may then be controlled as to remove the manufactured product from the transportation device.

The term "computer" may be understood as covering any devices for the processing of pre-defined calculation rules. These calculation rules can be in the form of software, hardware or a mixture of software and hardware.

## Claims

1. Computer-implemented method for determining a three-dimensional Gaussian splat representation (80) of a physical object or physical scene, the method comprising:
• Receiving an input condition (10) comprising or consisting of at least one of a text description or an image of the physical object or physical scene;
• Generating a point cloud (25) characterizing the input condition (10);
• Determining, from the point cloud (25), a set of reference points (35) in three-dimensional space, wherein the reference points (35) are selected to maximize a spatial coverage of the reference points (35);
• Sampling a first latent representation (45);
• Determining a second latent representation (55) by providing the first latent representation (45) as input to a denoiser (50) of a diffusion model, wherein the denoiser (50) uses the input condition (10) as conditioning input;
• Decoding the second latent representation (55) into the Gaussian splat representation (80) using a decoder (60), wherein the decoder (60) comprises:
• A first decoder (61) that generates a first output (63) using the second latent representation (55) and the reference points (35) as input;
• A second decoder (62) that generates a second output (64) using the second latent representation (55) and the references points (35) as input;
• A feature sharing module (65) that fuses the second output (64) into the first output (63) thereby determining a first fused output (66) and that fuses the first output (63) into the second output (64) thereby determining a fused second output (67);
• A projection module (70) that determines centroids, scales, and rotations (75) of the three-dimensional Gaussian splat representation (80) using the first fused output (66) as input and that determines colors and opacities (76) of the three-dimensional Gaussian splat representation (80) using the second fused output (67) as input.

2. Method according to claim 1, wherein determining the set of reference points (35) is achieved by applying a farthest point sampling algorithm to the point cloud (25).

3. Computer-implemented method for determining an image of a physical object or physical scene from a predefined viewpoint comprising:
• Determining a three-dimensional Gaussian splat representation (80) of the physical object or physical scene according to claim 1 using at least one of a text description or an image of the physical object or physical scene as input condition (10);
• Rendering the three-dimensional Gaussian splat representation (80) from the viewpoint to generate the image.

4. Computer-implemented method for creating and/or augmenting a dataset (T) comprising images, wherein the dataset (T) is configured for training and/or testing a machine learning system (60), wherein creating and/or augmenting the dataset (T) comprises generating at least one image of a physical object or physical scene from a predefined at least one viewpoint according to claim 3 and including the at least one image in the dataset (T).

5. Computer-implemented method for training a machine learning system (60) comprising the steps of:
• Creating or augmenting a dataset (T) according to claim 4;
• Providing at least a subset of the images of the dataset (T) as input (*xᵢ*) to the machine learning system (60) thereby determining a predicted output of the machine learning system (60);
• Training the machine learning system (60) according to a loss function, wherein the loss function characterizes a difference between the predicted output and a desired output (*tᵢ*) for the subset of images.

6. Method according to claim 5, wherein the method further comprises the steps of:
• Annotating at least a subset the generated images of the dataset (T) with the desired output that shall be predicted by the machine learning system.

7. Computer-implemented method for training the decoder (60) according to claim 1, the method comprising:
• Obtaining a plurality of three-dimensional Gaussian splat representations (80a) characterizing a physical object or a physical scene;
• Determining a set of reference points (35), wherein the reference points (35) are three-dimensional points selected to maximize a spatial coverage of the mean of the Gaussian splat representations (80a);
• Grouping the three-dimensional Gaussian splat representations (80a) into groups (91) according to the reference points (35);
• Determining a training latent representation (93), wherein the training latent representation (93) is determined by using the groups (91) as input to an encoder (92);
• Decoding the training latent representation (93) into three-dimensional Gaussian splat parameters (75, 76) characterizing predicted three-dimensional Gaussian splat representations (80b), wherein decoding is achieved using the training latent representation (93) and the reference points (35) as input to the decoder (60);
• Determining a loss value (96) as output of a loss function, wherein the loss function comprises or consists of a first loss term characterizing a difference between the three-dimensional Gaussian splat representations (80a) and the predicted three-dimensional Gaussian splat representations (80b);
• Updating parameters of the decoder (60) based on the loss value (96).

8. Method according to claim 7, wherein the loss function further comprises at least one, preferably a combination, of the following terms, wherein each of the following terms is preferably weighted by a weighting factor:
• A second loss term indicating a difference between a first rendered image and a second rendered image, wherein the first rendered image is determined based on the three-dimensional Gaussian splat representations (80a) and wherein the second rendered image is determined based on the predicted three-dimensional Gaussian splat representations (80b);
• A third loss term characterizing a locality-preserving regularization loss between neighboring pixels of the second rendered image.

9. Computer-implemented method for training the denoiser (50) of the diffusion model according to claim 1, the method comprising:
• Obtaining a plurality of three-dimensional Gaussian splat representations (80) characterizing physical objects or physical scenes;
• Obtaining corresponding conditioning inputs (10) comprising at least one of a text description or an image for each of the three-dimensional Gaussian splat representations (80);
• Determining training latent representations (93a) by processing the three-dimensional Gaussian splat representations (80) using an encoder (92);
• For a batch of training latent representations (93a):
• Randomly sampling an amount of timesteps for the diffusion model;
• Applying a forward diffusion process (98) to the training latent representations (93a) by gradually adding noise over the randomly sampled timesteps to generate noisy training latent representations (99);
• Providing the noisy training latent representations (99) and corresponding conditioning inputs (10) to the denoiser (50) of the diffusion model;
• Obtaining predicted latent representations (93b) from the diffusion model;
• Computing a loss value (96) characterizing a difference between the predicted latent representations (93b) and the training latent representations (93a);
• Updating parameters of the denoiser (50) of the diffusion model based on the loss value (96).

10. Method according to any one of the previous claims, wherein the denoiser (50) is a neural network that is configured to receive a text description or an image as conditioning input by providing an embedding of the text description or image to layers of the neural network by means of cross attention.

11. Method according to any one of the previous claims, wherein the embedding of the text description or image is determined by a CLIP machine learning system and/or wherein the denoiser (50) is configured according to the Shap-e architecture and/or wherein the encoder (92) is configured according to the architecture of GaussianMAE and/or wherein the first decoder (61) and second decoder (62) are transformers with a predefined amount of transformer blocks and/or wherein the point cloud (25) characterizing the input condition (10) is determined using the input condition (10) as input to a Point-e model.

12. Training system (140), which is configured to carry out the training method according to any one of the claims 7 to 11.

13. Control system (40), which is configured to use the machine learning system trained according to claim 5 or 6 for determining a control signal (A), wherein the control signal (A) is configured to control an actuator (10) and/or a display (10a).

14. Computer program that is configured to cause a computer to carry out the method according to any one of the claims 1 to 11 with all of its steps if the computer program is carried out by a processor (45, 145).

15. Machine-readable storage medium (46, 146) on which the computer program according to claim 14 is stored.

## Amended claims

### Amended claims in accordance with Rule 137(2) EPC.

1. Computer-implemented method for determining an image of a physical object or physical scene from a predefined viewpoint comprising:
• Determining a three-dimensional Gaussian splat representation (80) of the physical object or physical scene according using at least one of a text description or an image of the physical object or physical scene as input condition (10), wherein determining the three-dimensional Gaussian splat representation comprises the steps of (80):
• Receiving an input condition (10) comprising or consisting of at least one of a text description or an image of the physical object or physical scene;
• Generating a point cloud (25) characterizing the input condition (10);
• Determining, from the point cloud (25), a set of reference points (35) in three-dimensional space, wherein the reference points (35) are selected to maximize a spatial coverage of the reference points (35);
• Sampling a first latent representation (45);
• Determining a second latent representation (55) by providing the first latent representation (45) as input to a denoiser (50) of a diffusion model, wherein the denoiser (50) uses the input condition (10) as conditioning input;
• Decoding the second latent representation (55) into the Gaussian splat representation (80) using a decoder (60), wherein the decoder (60) comprises:
• A first decoder (61) that generates a first output (63) using the second latent representation (55) and the reference points (35) as input;
• A second decoder (62) that generates a second output (64) using the second latent representation (55) and the references points (35) as input;
• A feature sharing module (65) that fuses the second output (64) into the first output (63) thereby determining a first fused output (66) and that fuses the first output (63) into the second output (64) thereby determining a fused second output (67);
• A projection module (70) that determines centroids, scales, and rotations (75) of the three-dimensional Gaussian splat representation (80) using the first fused output (66) as input and that determines colors and opacities (76) of the three-dimensional Gaussian splat representation (80) using the second fused output (67) as input;
• Rendering the three-dimensional Gaussian splat representation (80) from the viewpoint to generate the image.

2. Method according to claim 1, wherein determining the set of reference points (35) is achieved by applying a farthest point sampling algorithm to the point cloud (25).

3. Computer-implemented method for creating and/or augmenting a dataset (T) comprising images, wherein the dataset (T) is configured for training and/or testing a machine learning system (60), wherein creating and/or augmenting the dataset (T) comprises generating at least one image of a physical object or physical scene from a predefined at least one viewpoint according to claim 3 and including the at least one image in the dataset (T).

4. Computer-implemented method for training a machine learning system (60) comprising the steps of:
• Creating or augmenting a dataset (T) according to claim 3;
• Providing at least a subset of the images of the dataset (T) as input (*xᵢ*) to the machine learning system (60) thereby determining a predicted output of the machine learning system (60);
• Training the machine learning system (60) according to a loss function, wherein the loss function characterizes a difference between the predicted output and a desired output (*tᵢ*) for the subset of images.

5. Method according to claim 4, wherein the method further comprises the steps of:
• Annotating at least a subset the generated images of the dataset (T) with the desired output that shall be predicted by the machine learning system.

6. Computer-implemented method for training the decoder (60) according to claim 1, the method comprising:
• Obtaining a plurality of three-dimensional Gaussian splat representations (80a) characterizing a physical object or a physical scene;
• Determining a set of reference points (35), wherein the reference points (35) are three-dimensional points selected to maximize a spatial coverage of the mean of the Gaussian splat representations (80a);
• Grouping the three-dimensional Gaussian splat representations (80a) into groups (91) according to the reference points (35);
• Determining a training latent representation (93), wherein the training latent representation (93) is determined by using the groups (91) as input to an encoder (92);
• Decoding the training latent representation (93) into three-dimensional Gaussian splat parameters (75, 76) characterizing predicted three-dimensional Gaussian splat representations (80b), wherein decoding is achieved using the training latent representation (93) and the reference points (35) as input to the decoder (60);
• Determining a loss value (96) as output of a loss function, wherein the loss function comprises or consists of a first loss term characterizing a difference between the three-dimensional Gaussian splat representations (80a) and the predicted three-dimensional Gaussian splat representations (80b);
• Updating parameters of the decoder (60) based on the loss value (96).

7. Method according to claim 6, wherein the loss function further comprises at least one, preferably a combination, of the following terms, wherein each of the following terms is preferably weighted by a weighting factor:
• A second loss term indicating a difference between a first rendered image and a second rendered image, wherein the first rendered image is determined based on the three-dimensional Gaussian splat representations (80a) and wherein the second rendered image is determined based on the predicted three-dimensional Gaussian splat representations (80b);
• A third loss term characterizing a locality-preserving regularization loss between neighboring pixels of the second rendered image.

8. Computer-implemented method for training the denoiser (50) of the diffusion model according to claim 1, the method comprising:
• Obtaining a plurality of three-dimensional Gaussian splat representations (80) characterizing physical objects or physical scenes;
• Obtaining corresponding conditioning inputs (10) comprising at least one of a text description or an image for each of the three-dimensional Gaussian splat representations (80);
• Determining training latent representations (93a) by processing the three-dimensional Gaussian splat representations (80) using an encoder (92);
• For a batch of training latent representations (93a):
• Randomly sampling an amount of timesteps for the diffusion model;
• Applying a forward diffusion process (98) to the training latent representations (93a) by gradually adding noise over the randomly sampled timesteps to generate noisy training latent representations (99);
• Providing the noisy training latent representations (99) and corresponding conditioning inputs (10) to the denoiser (50) of the diffusion model;
• Obtaining predicted latent representations (93b) from the diffusion model;
• Computing a loss value (96) characterizing a difference between the predicted latent representations (93b) and the training latent representations (93a);
• Updating parameters of the denoiser (50) of the diffusion model based on the loss value (96).

9. Method according to any one of the previous claims, wherein the denoiser (50) is a neural network that is configured to receive a text description or an image as conditioning input by providing an embedding of the text description or image to layers of the neural network by means of cross attention.

10. Method according to any one of the previous claims, wherein the embedding of the text description or image is determined by a CLIP machine learning system and/or wherein the denoiser (50) is configured according to the Shap-e architecture and/or wherein the encoder (92) is configured according to the architecture of GaussianMAE and/or wherein the first decoder (61) and second decoder (62) are transformers with a predefined amount of transformer blocks and/or wherein the point cloud (25) characterizing the input condition (10) is determined using the input condition (10) as input to a Point-e model.

11. Training system (140), which is configured to carry out the training method according to any one of the claims 6 to 10.

12. Control system (40), which is configured to use the machine learning system trained according to claim 4 or 5 for determining a control signal (A), wherein the control signal (A) is configured to control an actuator (10) and/or a display (10a).

13. Computer program that is configured to cause a computer to carry out the method according to any one of the claims 1 to 11 with all of its steps if the computer program is carried out by a processor (45, 145).

14. Machine-readable storage medium (46, 146) on which the computer program according to claim 14 is stored.
